**Europäisches Patentamt**

**European Patent Office**

**Office européen des brevets**

(19)

(11) Numéro de publication : **0 156 736**
**B1**

(12)

# FASCICULE DE BREVET EUROPÉEN

(45) Date de publication du fascicule du brevet :
15.03.89

(51) Int. Cl.⁴ : **E 06 B 7/23**

(21) Numéro de dépôt : 85400615.2

(22) Date de dépôt : 28.03.85

(54) **Joint d'étanchéité du type profilé, en particulier pour l'étanchéité de portes coulissantes de véhicules.**

(30) Priorité : 28.03.84 FR 8404859

(43) Date de publication de la demande :
02.10.85 Bulletin 85/40

(45) Mention de la délivrance du brevet :
15.03.89 Bulletin 89/11

(84) Etats contractants désignés :
AT BE CH DE FR GB IT LI LU NL SE

(56) Documents cités :
DE--A-- 1 683 650
DE--A-- 2 421 010
DE--C-- 581 038
FR--A-- 2 008 961
FR--A-- 2 077 672

(73) Titulaire : **Bizien, Yvon**
**Rue des vieilles Ursulines**
**F-29250 Saint Pol de Léon (FR)**

(72) Inventeur : **Bizien, Yvon**
**Rue des vieilles Ursulines**
**F-29250 Saint Pol de Léon (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

## Description

La présente invention concerne le domaine des joints d'étanchéité du type profilé, c'est-à-dire les joints d'étanchéité de grande longueur ayant une section constante.

La présente invention concerne plus précisément les joints profilés destinés à assurer l'étanchéité entre un premier et un second éléments de structure susceptibles de déplacement relatif, du genre ouvrant-dormant et plus précisément du genre porte-dormant ou encore fenêtre-dormant.

La présente invention vise en particulier à assurer l'étanchéité de portes coulissantes de véhicules.

De nombreux types de joints d'étanchéité profilés ont déjà été proposés.

Parmi ceux-ci, on citera les joints à soufflets, les joints à lèvre, ou encore les joints creux associés à des moyens hydrauliques ou pneumatiques aptes à assurer leur déformation, tels que décrits dans la demande de brevet français publiée sous le n° 2 264 958.

On a décrit dans le document DE-A-1 683 650 un joint d'étanchéité comprenant une embase destinée à être fixée sur le bord d'un premier élément de structure, un élément d'étanchéité qui comporte deux joints et une bande souple élastique formant charnière, qui relie à articulation l'embase et l'élément d'étanchéité. L'un des joints de l'élément d'étanchéité vient reposer en permanence contre la face du premier élément de structure qui porte l'embase. Le second joint peut pivoter autour de la bande souple pour venir en contact avec le second élément de structure.

On a décrit dans le document DE-C-581 038 un joint d'étanchéité comprenant une embase destinée à être fixée sur un premier élément de structure, et un élément d'étanchéité à deux lèvres adapté pour venir reposer contre le second élément de structure.

On a décrit dans le document FR-A-2 077 672 un joint d'étanchéité comportant deux couples de lèvres. Selon un premier mode de réalisation le joint est constitué par quatre lèvres divergentes à partir d'un sommet commun et formant deux couples opposés, l'une de ces lèvres se prolongeant par des moyens propres à assurer la fixation du joint. Selon un second mode de réalisation le joint est constitué par quatre lèvres formant deux dièdres solidaires par leur sommet, les côtés du dièdre extérieur étant utilisés pour la fixation du joint, par exemple par collage.

Les différents joints d'étanchéité jusqu'ici proposés présentent cependant de nombreux inconvénients.

On a constaté en particulier, dans la pratique, et cela est bien entendu essentiel, que les joints d'étanchéité classiques présentent une efficacité médiocre dans un grand nombre d'applications pour lesquelles les joints sont soumis à des contraintes permanentes non négligeables.

Parmi ces applications, on citera la construction de portes coulissantes pour véhicules automobiles destinés au transport de lourdes charges ou encore pour véhicules ferroviaires.

La présente invention vient maintenant améliorer la situation en proposant un joint d'étanchéité perfectionné donnant pleinement satisfaction dans le cadre des applications délicates précitées.

Le joint d'étanchéité conforme à la présente invention permet notamment d'assurer efficacement l'étanchéité de portes coulissantes de véhicules équipés de dispositifs frigorifiques.

Pour cela, la présente invention propose un joint d'étanchéité profilé destiné à assurer l'étanchéité entre un premier et un second éléments de structure susceptibles de déplacement relatif, du genre ouvrant-dormant, lorsque ces deux éléments de structure sont sensiblement adjacents, du type connu en soi comportant :

— une embase destinée à être fixée sur le bord du premier élément de structure,

— un élément d'étanchéité mobile qui comporte au moins deux joints, et

— une bande souple élastique formant charnière reliant à articulation l'embase et l'élément d'étanchéité,

caractérisé par le fait que l'élément d'étanchéité mobile comporte une âme sensiblement rigide constituée d'un voile généralement plan au voisinage des bords rectilignes parallèles duquel sont raccordés respectivement les premier et second joints, par le fait que chacun des premier et second joints possède une lèvre souple incurvée dont la concavité est dirigée vers l'autre joint, et par le fait que la bande souple élastique est adaptée pour contrôler un pivotement de l'élément d'étanchéité par rapport à l'embase entre une position de repos obtenue lorsque les éléments de structure sont en position relative écartée, et une position d'utilisation obtenue, lors du rapprochement des éléments de structure, telle qu'au cours de ce rapprochement, un premier joint soit tout d'abord porté au contact de la face associée du second élément de structure, puis par pivotement de l'élément d'étanchéité par rapport à l'embase le second joint soit ensuite porté en appui contre une seconde face, orthogonale à la première, du second élément de structure.

Comme cela apparaîtra à la lecture de la description qui va suivre, le joint d'étanchéité conforme à la présente invention, grâce au pivotement induit automatiquement lors du passage de la position de repos à la position d'utilisation, garantit une étanchéité parfaite du système, sans la moindre intervention d'un opérateur.

On notera en particulier que, selon l'invention, grâce à la présence de deux joints, une double étanchéité est obtenue, sur deux faces orthogonales entre elles du second élément de structure.

Par ailleurs, comme cela ressortira de la description qui va suivre, grâce au pivotement du second joint, à lèvre, induit lors du passage en position d'utilisation, la présente invention garantit un positionnement correct et un contact étroit du second joint, à lèvre, sur le second élément de structure.

La bande souple élastique formant charnière est avantageusement reliée à l'élément d'étanchéité au voisinage du bord de l'âme de celui-ci portant le second joint à lèvre.

Selon un mode de réalisation préférentiel conforme à la présente invention, le second joint, à lèvre, présente une longueur, considérée en section droite, supérieure à celle du premier joint.

Selon une caractéristique avantageuse de la présente invention, l'embase du joint est formée de deux ailes reliées en « L ».

Par ailleurs, de préférence, la bande souple formant charnière est alors reliée à l'embase au voisinage de la liaison entre les ailes de celle-ci.

Selon une autre caractéristique avantageuse de la présente invention, la bande souple élastique formant charnière du joint d'étanchéité est adaptée pour définir au repos une inclinaison du voile de l'élément d'étanchéité en regard du chant du premier élément de structure, et pour autoriser à l'utilisation un pivotement de l'élément d'étanchéité par rapport à l'embase, induit par le contact du premier joint sur la face associée du second élément de structure pour déplacer ledit voile sensiblement parallèlement au chant du premier élément de structure et porter le second joint, à lèvre, en appui contre l'autre face respectivement associée du second élément de structure.

De façon avantageuse, selon l'invention, le joint d'étanchéité est réalisé en polychlorure de vinyle.

D'autres caractéristiques et avantages de la présente invention apparaîtront à la lecture de la description détaillée qui va suivre et en regard des dessins annexés, donnés à titre d'exemple non limitatif d'un mode de réalisation préférentiel selon l'invention, et sur lesquels :

— la figure 1 représente une vue schématique en perspective d'un joint d'étanchéité conforme à la présente invention, en position de repos,

— la figure 2 représente une vue schématique en coupe transversale de deux éléments de structure équipés d'un joint d'étanchéité conforme à la présente invention, le joint d'étanchéité étant placé en position intermédiaire entre la position de repos et la position d'utilisation précitées,

— la figure 3 représente une vue en coupe transversale des mêmes éléments de structure équipés d'un joint conforme à la présente invention, ce dernier étant représenté alors en position d'utilisation.

Dans la suite de la description, on appellera position de repos la position dans laquelle les éléments de structure étant écartés, le joint n'intervient aucunement pour assurer l'étanchéité entre ceux-ci.

Par contre, on appellera position d'utilisation, la position dans laquelle les deux éléments de structure étant au moins sensiblement adjacents, le joint est utilisé pour assurer l'étanchéité entre ceux-ci.

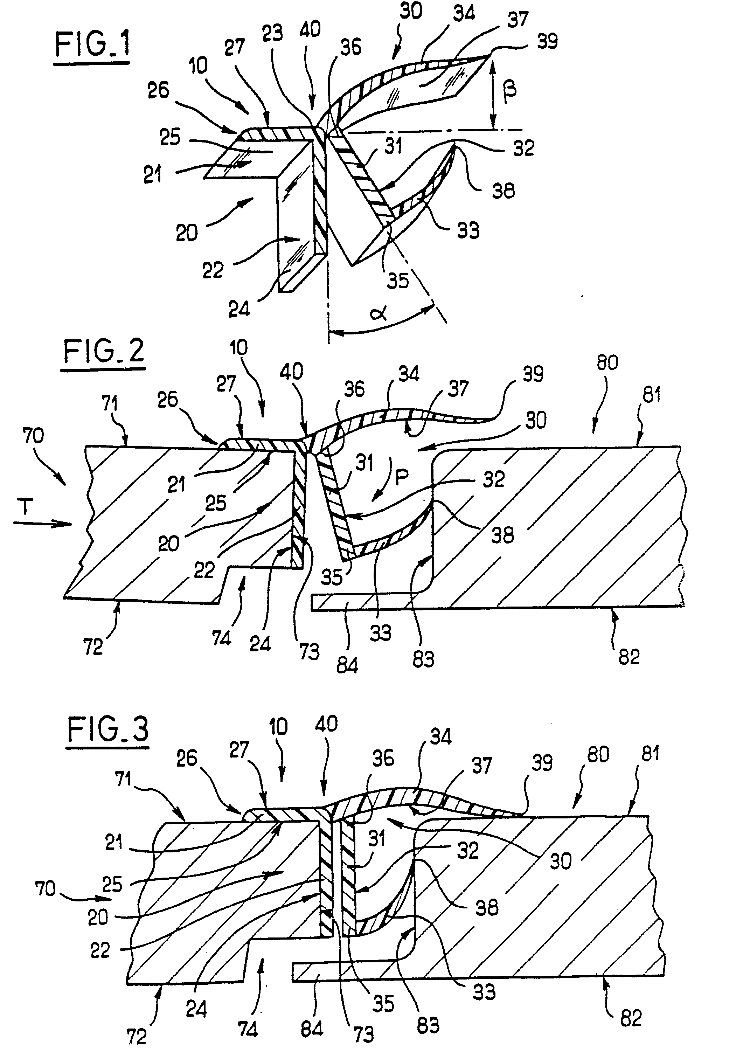

Comme cela a été précédemment évoqué, une telle position d'utilisation est illustrée par exemple sur la figure 3.

D'une façon générale, comme cela est représenté sur les figures 1 à 3 annexées, le joint d'étanchéité 10 conforme à la présente invention comprend une embase 20 rigide, un élément d'étanchéité 30 et une bande souple élastique 40 formant charnière reliant à articulation l'embase 20 et l'élément d'étanchéité 30.

L'embase 20 est adaptée pour être fixée sur le bord d'un premier élément de structure 70, comme cela est représenté sur les figures 2 et 3.

Ce premier élément de structure 70, constitué par exemple d'une porte coulissante, est destiné à coopérer avec le second élément de structure 80, sensiblement adjacent en position de fermeture, et formé par exemple d'un montant du dormant.

Plus précisément, on distingue sur les figures 2 et 3, les surfaces latérales principales planes et parallèles 71, 72 du premier élément 70, formant respectivement les faces extérieure ou intérieure de cet élément, le chant 73 perpendiculaire aux surfaces latérales 71, 73 précitées, et un évidement 74 de section droite généralement rectangulaire adjacent au chant 73 et à la surface latérale 72.

De façon similaire, on distingue sur les figures 2 et 3, les surfaces latérales principales planes parallèles 81, 82 du second élément de structure, constituant les faces respectivement extérieure ou intérieure de ce second élément, le chant 83 du second élément, perpendiculaire aux surfaces latérales 81 et 82 précitées et sensiblement adjacent et parallèle au chant 73 du premier élément, en position dite d'utilisation comme représentée sur la figure 3, ainsi enfin, qu'un voile 84 d'épaisseur inférieure à l'épaisseur du second élément 80 reliant les surfaces latérales 81, 82, voile 84 qui prolonge la surface latérale principale 82. Comme représenté sur la figure 3, lorsque le premier élément 70 est rapproché du second élément 80, le voile 84 tend à pénétrer dans l'évidement 74, pour ménager une chicane, et déterminer le cas échéant, un appui pour le premier élément de structure 70.

Plus précisément, selon le mode de réalisation représenté sur les figures, l'embase 20 est formée de deux ailes 21, 22 reliées en « L ». La zone de liaison entre les deux ailes 21 et 22 est référencée 23 sur les figures.

La longueur de l'aile 22 considérée en section droite correspond sensiblement à la largeur du chant 73 du premier élément de structure. En position assemblée de l'embase 20 sur le premier élément 70, la surface interne 24 de l'aile 22 repose contre le chant 73, tandis que la surface interne 25 de l'aile 21 repose contre la surface latérale principale 71 de ce premier élément. Afin d'éviter tout risque de blessure pour un utilisateur, l'arête du bord libre de la surface externe 27 de l'aile 21 est de préférence tronquée ou arrondie comme cela est représenté en 26 sur les figures.

L'élément d'étanchéité comporte d'une part une âme 31 au moins sensiblement rigide, d'autre part un premier 33 et un second 34 joints à lèvre fixés sur celle-ci.

Plus précisément, selon le mode de réalisation représenté sur les figures, l'âme 31 de l'élément d'étanchéité est constituée d'un voile plan. Les premier et second joints à lèvre 33, 34 formés chacun d'une lèvre souple incurvée présentant une concavité dirigée vers l'autre joint, sont raccordés respectivement sur l'âme 31 au voisinage des bords rectilignes parallèles 35, 36 de celle-ci.

Plus précisément encore, les joints d'étanchéité 33, 34 s'étendent d'un même côté de l'âme 31 et se raccordent sensiblement perpendiculairement à celle-ci.

La bande souple 40 formant charnière relie le bord 36 de l'âme 31 portant le second joint à lèvre 34 et une surface extérieure de la liaison 23 entre les ailes 21 et 22 de l'embase.

Le second joint à lèvre 34 raccordé à l'embase 31 au voisinage de la bande souple élastique formant charnière 40 présente de préférence une longueur, considérée en section droite, supérieure à celle du premier joint à lèvre 33 porté sur le bord libre 35 de l'âme 31.

Selon le mode de réalisation représenté sur les figures, le premier joint à lèvre 33 est fixé sur la surface 32 de l'âme 31 opposée à l'aile 22 de l'embase, tandis que le bord 36 de l'âme 31 est fixé sur la surface inférieure 37 du second joint à lèvre 34, lui-même raccordé sur la surface extérieure de la liaison 23 entre les ailes 21 et 22 de l'embase.

Dans un tel cas, l'extrémité du second joint à lèvre 34 adjacente à l'âme 31 forme la bande souple élastique 40, constituant la charnière.

Un tel mode de réalisation n'est cependant aucunement limitatif.

On peut ainsi prévoir de raccorder les premier 33 et second 34 joints à lèvre sur la surface 32 de l'âme 31, et de disposer une bande souple élastique séparée entre le bord 36 de l'âme 31 et la surface extérieure de la liaison 23 entre les ailes 21 et 22 de l'embase.

Plus précisément, comme cela est représenté sur les figures 1 et 2, la bande souple formant charnière 40 est adaptée pour définir au repos une inclinaison illustrée par l'angle α sur les figures de l'âme 31 de l'élément d'étanchéité en regard de l'aile 22 de l'embase 20, ou encore du chant 73 parallèle à cette dernière.

Cette inclinaison α est déterminée pour écarter le bord libre 39 du second joint à lèvre 37, d'un plan défini par la surface inférieure 25 de l'aile 21 de l'embase 20, d'une amplitude illustrée par la référence β sur les figures, en éloignement de l'aile 22 de l'embase 20, l'extrémité libre 38 du premier joint à lèvre 33 restant cependant du même côté du plan défini par ladite surface 25, que l'âme 31.

Il résulte des dispositions qui précèdent que, les surfaces latérales principales 71, 72 et 81, 82 des éléments de structure 70, 80 étant sensiblement parallèles et coplanaires, lorsque le chant 73 du premier élément 70 est rapproché du chant 83 du second élément selon un mouvement ayant pour composante essentielle une translation illustrée par la référence T sur la figure 2, dirigée perpendiculairement auxdits chants 73, 83, dans un premier temps, le bord libre 38 du premier joint à lèvre 33 vient en contact contre le chant 83 du second élément de structure 80, comme illustré sur la figure 2.

Le bord libre 39 du second joint à lèvre 34 est alors espacé de la surface latérale principale 81 du second élément de structure 80 d'une distance β.

La poursuite du rapprochement des chants 73 et 83 des éléments de structure selon la translation T précitée induit un couple de pivotement de l'élément d'étanchéité 30 par rapport à l'embase 20 autour de la bande souple élastique 40, en raison du contact établi entre le bord libre 38 du premier joint d'étanchéité 33 et le chant 83 du second élément de structure 80. Un tel couple de pivotement est illustré par la flèche référencée P sur la figure 2. Ce couple tend à déplacer l'âme 31 en rapprochement de l'aile 22 de l'embase 20, sensiblement parallèlement à celle-ci. Simultanément, le couple de pivotement P tend à rapprocher le bord libre 39 du second joint à lèvre 34, du plan défini par la surface inférieure 25 de l'aile 27. Ledit bord libre 39 du second joint à lèvre 34 est de ce fait porté en appui contre la face latérale principale 81 du second élément de structure 80, sensiblement coplanaire à la face latérale principale 71 du premier élément de structure 70. Ainsi, comme cela est représenté sur la figure 3, en position dite d'utilisation dans laquelle les deux éléments de structure 70 et 80 sont sensiblement adjacents, le premier joint d'étanchéité 33 propose par son bord libre 38 contre le chant 83 du second élément de structure 80, tandis que le bord libre 39 du second joint d'étanchéité 34 repose contre la surface latérale principale 81 du second élément de structure 80. De ce fait, une double étanchéité du système est assurée.

Lors de l'écartement ultérieur des deux éléments de structure 70, 80, c'est-à-dire lors d'une ouverture, en cas d'utilisation pour une porte coulissante de véhicule, la bande souple élastique 40 assure un rappel élastique de l'élément d'étanchéité 30 en position de repos, comme représenté sur la figure 1, par pivotement de celui-ci par rapport à l'embase 20 dans le sens opposé à la flèche référencée P sur la figure 2.

Afin de garantir un contact étroit du bord libre 39 du second joint à lèvre 34 contre la surface 81 du second élément de structure 80, en position d'utilisation, il est avantageux d'assurer une certaine déformation dudit second joint à lèvre 34, lors du passage en position d'utilisation.

Pour cela, selon le mode de réalisation particulier précédemment décrit, la distance D considérée en section droite, reliant le bord libre 39 du second joint à lèvre 34 à la génératrice longitudinale de celui-ci adjacente au bord 36 de l'âme 31 doit répondre à la relation arc sin $(\beta/D) < \alpha$.

Bien entendu la présente invention n'est aucunement limitée au mode de réalisation particulier qui vient d'être décrit, mais s'étend à toute variante conforme à son esprit.

Ainsi, par exemple, la géométrie de l'embase 20 pourra être l'objet de nombreuses variantes de réalisations.

A titre d'exemple, l'embase 20 peut être formée d'un simple voile plan destiné à être fixé soit sur la surface principale latérale 71 du premier élément de structure, soit encore sur le chant 73 de celui-ci.

De même, la géométrie des joints à lèvre 33, 34 de l'élément d'étanchéité 30 sont susceptibles de diverses variantes. Le premier joint d'étanchéité 33 peut par exemple présenter une concavité orientée à l'opposé du second joint d'étanchéité 34, ou encore, on peut prévoir que le premier joint d'étanchéité 33 représenté sur les figures, présentant une concavité dirigée vers le second joint d'étanchéité 34, soit doublé, d'un premier joint auxiliaire, de concavité opposée, relié à l'embase 31 en position adjacente au premier joint à lèvre 33, à l'opposé dudit second joint 34. L'homme de l'art comprendra enfin que le premier joint à lèvre peut être remplacé par un joint d'un autre type, tel qu'un joint à bourrelet ou autre.

L'homme de l'art comprendra par ailleurs aisément que le fonctionnement du joint d'étanchéité conforme à la présente invention est similaire à celui précédemment évoqué, dans le cas où le rapprochement en translation des éléments de structure 70 et 80 est accompagné d'un léger pivotement relatif, comme cela ressort par exemple à l'examen des figures 2 et 3. On notera en effet que sur la figure 2, les surfaces latérales principales 71, 72 et 81, 82 des deux éléments de structure ne sont pas rigoureusement parallèles, alors que cela est le cas sur la figure 3.

Enfin, l'application des joints d'étanchéité conforme à la présente invention ne se limite pas aux portes coulissantes de véhicules, mais s'étend à toute variantes d'agencement du genre ouvrant-dormant.

Le joint d'étanchéité conforme à la présente invention est réalisé de préférence en polychlorure de vinyle. Plus précisément, l'embase 20 et l'âme 31 de l'élément d'étanchéité sont de préférence réalisées en polychlorure de vinyle rigide, tandis que les joints à lèvre 33 et 34 ainsi que la bande souple élastique 40 sont de préférence réalisés en polychlorure de vinyle souple.

Ainsi, l'assemblage de l'embase 20 sur l'un des éléments de structure peut être réalisé par collage, ou par tout autre moyen équivalent, tel que par vissage ou collage.

En outre, l'agencement des éléments de structure 70 et 80 représentés sur les figures annexés et précédemment évoqués, n'est aucunement limitatif. Selon le mode de réalisation représenté, les chants 73 et 83 desdits éléments de structure sont sensiblement adjacents et parallèles.

En variante, on peut par exemple envisager de disposer les éléments de structure 70 et 80 sensiblement perpendiculairement.

Dans un tel cas, en supprimant le voile 84, le premier joint à lèvre 33 pourrait venir en appui contre la surface latérale principale 82 du second élément de structure, tandis que le second joint à lèvre 34 viendrait en appui contre le chant 83 de celui-ci.

La présente invention s'avère tout particulièrement avantageuse pour assurer l'étanchéité de portes de véhicules adaptés pour le transport de produits périssables, équipés de groupes frigorifiques.

La double étanchéité assurée par le joint conforme à l'invention permet en effet d'éliminer quasi-totalement les pertes induites classiquement entre les portes et les dormants.

Le joint conforme à la présente invention s'avère particulièrement avantageux pour assurer l'étanchéité de portes coulissantes de véhicules, notamment de camions, déplacées en translation grâce au dispositif décrit dans la demande de brevet française déposée en date du 24.03.1978 sous le n° 7 808 645 et publiée sous le n° 2 420 443.

**Revendications**

1. Joint d'étanchéité du type profilé, destiné à assurer l'étanchéité entre un premier (70) et un second (80) éléments de structure susceptibles de déplacement relatif, du genre ouvrant-dormant, lorsque ces deux éléments de structure sont sensiblement adjacents, du type comportant :

— une embase (20) destinée à être fixée sur le bord du premier élément de structure (70),

— un élément d'étanchéité (30) mobile qui comporte au moins deux joints (33, 34), et

— une bande souple élastique (40) formant charnière reliant à articulation l'embase (20) et l'élément d'étanchéité (30),

caractérisé par le fait que l'élément d'étanchéité (30) mobile comporte une âme (31) sensiblement rigide constituée d'une voile généralement plan au voisinage des bords rectilignes parallèles (35, 36) duquel sont raccordés respectivement les premier et second joints (33, 34), par le fait que chacun des premier et second joints possède une lèvre souple incurvée dont la concavité est dirigée vers l'autre joint, et par le fait que la bande souple élastique (40) est adaptée pour contrôler un pivotement de l'élément d'étanchéité (30) par rapport à l'embase (20) entre une position de repos obtenue lorsque les éléments de structure sont en position relative écartée, et une position d'utilisation obtenue, lors du rapprochement des éléments de structure, telle qu'au cours de ce rapprochement, un premier joint (33) soit tout d'abord porté au contact de la face associée (83) du second élément de structure (80), puis par pivotement de l'élément d'étanchéité par rapport à l'embase le second joint soit ensuite porté en appui contre une seconde face (81), orthogonale à la première, du second élément de structure (80).

2. Joint d'étanchéité selon la revendication 1, caractérisé par le fait que la bande souple (40) formant charnière est reliée à l'élément d'étanchéité (30) au voisinage du bord (36) de l'âme (31) de celui-ci portant le second joint, à lèvre (34).

3. Joint d'étanchéité selon l'une des revendications 1 et 2, caractérisé par le fait que le second joint, à lèvre (34) présente une longueur, considérée en section droite, supérieure à celle du premier joint (33).

4. Joint d'étanchéité selon l'une des revendications 1 à 3, caractérisé par le fait que l'embase (20) est formée de deux ailes (21, 22) reliées en « L ».

5. Joint d'étanchéité selon la revendication 4, caractérisé par le fait que la bande souple formant charnière (40) est reliée à l'embase (20) au voisinage de la liaison (23) entre les ailes (21, 22) de celle-ci.

6. Joint d'étanchéité selon l'une des revendications 1 à 5, caractérisé par le fait que la bande souple (40) formant charnière est adaptée pour définir au repos une inclinaison (α) du voile (31) de l'élément d'étanchéité (30) en regard du chant (73) du premier élément de structure (70), et pour autoriser à l'utilisation un pivotement de l'élément d'étanchéité (30) induit par le contact du premier joint (33) sur la face associée (83) du second élément de structure (80) pour déplacer ledit voile sensiblement parallèlement au chant (73) du premier élément de structure et porter le second joint, à lèvre, (34) en appui contre l'autre face respectivement associée (81) du second élément de structure (80).

7. Joint d'étanchéité selon l'une des revendications 1 à 6, caractérisé par le fait qu'il est réalisé en polychlorure de vinyle.

8. Joint d'étanchéité profilé pour portes coulissantes, selon l'une des revendications 1 à 7, destiné à assurer l'étanchéité entre deux éléments de structure (70, 80) susceptibles de déplacement relatif, dont l'un au moins est formé d'une porte coulissante, comprenant une embase (20) destinée à être fixée sur le bord d'un premier élément de structure (70), une bande souple élastique (40) formant charnière reliant à articulation l'embase et un élément d'étanchéité (30) mobile qui comporte au moins deux joints (33, 34), caractérisé par le fait que l'élément d'étanchéité mobile (30) comporte :

— une âme (31) au moins sensiblement rigide et plane, possédant deux bords rectilignes parallèles (35, 36), s'étendant en regard du chant du premier élément de structure (70) et reliée à la bande souple élastique formant charnière par un premier bord (36),

— un premier joint (33) du type à lèvre souple, de forme générale concave, étant fixé sensiblement orthogonalement sur l'âme (31) au voisinage du second bord (35) de celle-ci,

— un second joint (34) du type à lèvre souple, également de forme générale concave, à concavité tournée vers le premier joint, étant fixé sensiblement orthogonalement sur l'âme au voisinage du premier bord (36) de celle-ci, le second joint ayant une longueur, considérée en section droite, supérieure à celle du premier joint (33),

— la bande souple (40) formant charnière étant adaptée pour définir au repos une inclinaison (α)

de l'âme (31) de l'élément d'étanchéité (30) en regard du chant (73) du premier élément de structure (70), et pour autoriser à l'utilisation un pivotement de l'élément d'étanchéité (30) induit par le contact du premier joint (33) sur le chant associé du second élément de structure (80) pour déplacer l'âme (31) sensiblement parallèlement au chant du premier élément de structure et porter le second joint à lèvre (34) en appui contre une face principale associée (81) du second élément de structure (80).

**Claims**

1. Profiled sealing joint, intended to ensure the seal between a first structural member (70) and a second structural member (80) capable of relative movement, of the leaf/frame type, when these two structural members are substantially adjacent, of the type comprising :

— a base (20) intended to be fixed to the edge of the first structural member (70),

— a movable sealing member (30) which comprises at least two joints (33, 34), and

— a resilient flexible strip (40) forming a hinge pivotally connecting the base (20) and the sealing member (30),

characterised by the fact that the movable sealing member (30) comprises a substantially rigid centre-rib (31) constituted by a generally flat web respectively connected in the vicinity of the parallel rectilinear edges (35, 36) of which are the first and second joints (33, 34), by the fact that each of the first and second joints has a concave, flexible lip whereof the concave side is directed towards the other joint and by the fact that the resilient flexible strip (40) is adapted to control pivoting of the sealing member (30) with respect to the base (20) between an inoperative position obtained when the structural members are in the separated relative position and a position of use obtained, at the time when the structural members are moved towards each other, such that during this movement towards each other, a first joint (33) is first of all brought into contact with the associated face (83) of the second structural member (80), then by pivoting of the sealing member with respect to the base, the second joint is then brought to bear against a second face (81), at right angles to the first, of the second structural member (80).

2. Sealing joint according to Claim 1, characterised by the fact that the flexible strip (40) forming a hinge is connected to the sealing member (30) in the vicinity of the edge (36) of the centre-rib (31) of the latter supporting the second joint (34) comprising a lip.

3. Sealing joint according to one of Claims 1 and 2, characterised by the fact that the second joint (34) comprising a lip has a length, considered in cross-section, greater than that of the first joint (33).

4. Sealing joint according to one of Claims 1 to 3, characterised by the fact that the base (20) is formed by two arms (21, 22) connected in an L-shape.

5. Sealing joint according to Claim 4, characterised by the fact that the flexible strip forming a hinge (40) is connected to the base (20) in the vicinity of the connection (23) between the arms (21, 22) of the latter.

6. Sealing joint according to one of Claims 1 to 5, characterised by the fact that the flexible strip (40) forming a hinge is adapted to define, when inoperative, an inclination (α) of the web (31) of the sealing member (30) facing the edge (73) of the first structural member (70) and in order to allow for use a pivoting of the sealing member (30) caused by the contact of the first joint (33) on the associated face (83) of the second structural member (80) in order to move the said web substantially parallel to the edge (73) of the first structural member and to bring the second joint (34) comprising a lip into abutment with the other respectively associated face (81) of the second structural member (80).

7. Sealing joint according to one of Claims 1 to 6, characterised by the fact that it is made of polyvinyl chloride.

8. Profiled sealing joint for sliding doors, according to one of Claims 1 to 7, intended to ensure the seal between two structural members (70, 80) capable of a relative movement, whereof at least one is formed by a sliding door, comprising a base (20) intended to be fixed to the edge of a first structural member (70), a resilient, flexible strip (40) forming a hinge pivotally connecting the base and a movable sealing member (30) which comprises at least two joints (33, 34), characterised by the fact that the movable sealing member (30) comprises :

— an at least substantially rigid and flat web (31) having two parallel rectilinear edges (35, 36) extending opposite the edge of the first structural member (70) and connected to the resilient, flexible strip forming a hinge by a first edge (36),

— a first joint (33) of the type having a flexible lip, of general concave shape, being fixed substantially at right angles on the web (31) in the vicinity of the second edge (35) of the latter,

— a second joint (34) of the type having a flexible lip, also of general concave shape, with the concave side facing the first joint, being fixed substantially at right angles on the web in the vicinity of the first edge (36) of the latter, the second joint having a length, considered in cross-section, greater than that of the first joint (33),

— the flexible strip (40) forming a hinge being adapted to define, when inoperative, an inclination (α) of the web (31) of the sealing member (30) opposite the edge (73) of the first structural member (70) and in order to allow for use, pivoting of the sealing member (30) caused by the contact of the first joint (33) on the associated edge of the second structural member (80) in order to move the web (31) substantially parallel to the edge of the first structural member and to bring the second joint (34) comprising a lip into abutment against a main associated face (81) of the second structural member (80).

**Patentansprüche**

1. Fugendichtung der profilierten Bauart zum Gewährleisten der Dichtheit zwischen einem ersten (70) und einem zweiten Konstruktionselement (80), die relativ im Sinne eines Öffnens bzw. Schließens zueinander verlagerbar sind, wobei die beiden Konstruktionselemente eng benachbart sind, mit :

— einem Basisteil (20), das zur Befestigung am Rand des ersten Konstruktionselementes (70) bestimmt ist,

— einem beweglichen Dichtelement (30), das mindestens zwei Schenkel (33, 34) trägt und

— einem weichen elastischen Band (40), das ein Scharnier zu gelenkigen Anbindung des Dichtelements (30) am Basisteil (20) bildet,

dadurch gekennzeichnet, daß das bewegliche Dichtelement (30) einen im wesentlichen starren Steg (31) aufweist, der von einem allgemein ebenen Schild gebildet ist, benachbart dessen rechtwinkligen parallelen Rändern (35, 36) je der erste und der zweite Schenkel (33, 34) angebracht sind, daß die beiden Schenkel je eine weiche einwärts gekrümmte Lippe aufweisen, deren konkave Krümmung zum anderen Schenkel hin weist, und daß das weiche elastische Band (4) ein Schwenken des Dichtelementes (30) bezüglich dem Basisteil (20) zwischen einer Ruhestellung, bei welcher die Konstruktionselemente relativ entfernt voneinander sind, und einer Betriebsstellung, bei welcher die Konstruktionselemente sich einander annähern, steuern kann, derart, daß während dieser Annäherung der erste Schenkel (33) zunächst in Kontakt mit der zugehörigen Fläche (83) des zweiten Konstruktionselementes (80) und dann durch ein Schwenken des Dichtelementes bezüglich des Basisteils der zweite Schenkel anschließend in Anlage an eine zweite Fläche (81) des zweiten Konstruktionselementes (80) gebracht wird, die orthogonal zur ersten Fläche verläuft.

2. Fugendichtung nach Anspruch 1, dadurch gekennzeichnet, daß das weiche Band (40), welches das Scharnier bildet, an das Dichtelement (30) benachbart demjenigen Rand (36) des Steges (31) des Dichtelementes angebracht ist, welcher den zweiten, eine Dichtlippe aufweisenden Schenkel (34) trägt.

3. Fugendichtung nach Anspruch 1 oder 2, dadurch gekennzeichnet, daß der zweite, eine Dichtlippe aufweisende Schenkel (34) eine größere Querschnittslänge hat als der erste Schenkel (33).

4. Fugendichtung nach einem der Ansprüche 1 bis 3, dadurch gekennzeichnet, daß das Basisteil (20) von zwei Flügeln (21, 22) gebildet ist, welche die Gestalt eines « L » bilden.

5. Fugendichtung nach Anspruch 4, dadurch gekennzeichnet, daß das das Scharnier bildende weiche Band am Basisteil (20) benachbart der Verbindungstelle (23) zwischen den beiden Flügeln (21, 22) angebracht ist.

6. Fugendichtung nach einem der Ansprüche 1 bis 5, dadurch gekennzeichnet, daß das weiche, ein Scharnier bildende Band (40) in der Ruhestellung eine Neigung (α) des Schenkels (31) des Dichtelementes (30) bezüglich der Schmalseite (73) des ersten Konstruktionselementes (70) erzeugt und im Betrieb ein Schwenken des Dichtelementes (30) aufgrund des Kontaktes des ersten Schenkels (33) mit der zugehörigen Fläche (83) des zweiten Konstruktionselementes (80) zuläßt, um den Steg in eine im wesentlichen parallele Lage zur Schmalseite (73) des ersten Konstruktionselementes zu bringen und den zweiten Schenkel (34) in Anlage an der zugehörigen Seite (81) des zweiten Konstruktionselementes (80) zu bringen.

7. Fugendichtung nach einem der Ansprüche 1 bis 6, dadurch gekennzeichnet, daß sie aus Polyvinylchlorid besteht.

8. Fugendichtung für Schiebetüren nach einem der Ansprüche 1 bis 7 zum Gewährleisten der Dichtheit zwischen zwei Konstruktionselementen (70, 80), die relativ zueinander verlagerbar sind, von denen mindestens eines von einer Schiebetür gebildet ist, mit einem Basisteil (20), das zur Befestigung am Rand des ersten Konstruktionselementes (70) bestimmt ist, einem weichen elastischen Band (40), das ein Scharnier zur Anbindung am Basisteil eine beweglichen Dichtelementes (30) bildet, welches mindestens zwei Schenkel (33, 34) aufweist, dadurch gekennzeichnet, daß das bewegliche Dichtelement (30) umfaßt :

— einen im wesentlichen starren und ebenen Steg (31), der zwei gradlinige parallele Ränder (35, 36) aufweist, sich längs der Schmalseite des ersten Konstruktionselementes (70) erstreckt und mit dem ersten Rand (36) an das weiche elastische Band angeschlossen ist, welches ein Scharnier bildet,

— einen ersten Schenkel (33) der Bauart mit weicher Lippe und im wesentlichen konkaver Gestalt, der im wesentlichen orthogonal zum Steg (31) benachbart dessen zweitem Rand (35) angebracht ist,

— einen zweiten Schenkel (34) der Bauart mit weicher Lippe, der ebenfalls im wesentlichen konkav mit seiner konkaven Krümmung im wesentlichen zum ersten Schenkel hinweisend ausgebildet und im wesentlichen orthogonal zum Steg benachbart dessen ersten Randes (36) angebracht ist, wobei der zweite Schenkel im Querschnitt gesehen eine größere Länge als der erste Schenkel (33) aufweist,

— eine Ausbildung des weichen, ein Scharnier bildenden Bandes (40), um in der Ruhestellung eine Winkelneigung (α) des Steges (31) des Dichtelementes (30) bezüglich der Schmalseite (73) des ersten Konstruktionselementes (70) zu bilden und im Betrieb eine Schwenkung des Dichtelements (30) aufgrund des Kontaktes des ersten Schenkels (33) mit der zugehörigen Schmalseite des zweiten Konstruktionselementes (80) zuzulassen und so den Steg (31) in eine im wesentlichen parallele Lage zur Schmalseite des ersten Konstruktionselementes zu bringen und den zweiten Schenkel (34) in Anlage an eine zugehörige Hauptfläche (81) des zweiten Konstruktionselementes (80) zu bringen.

FIG.1

FIG.2

FIG.3